Europäisches Patentamt

European Patent Office

Office européen des brevets

(11) Publication number: **0 427 685 A2**

# EUROPEAN PATENT APPLICATION

(21) Application number: 90830479.3

(22) Date of filing: 23.10.90

(51) Int. Cl.⁵: **B29C 47/26**, B29C 47/20

(30) Priority: 06.11.89 IT 368489

(43) Date of publication of application:
15.05.91 Bulletin 91/20

(84) Designated Contracting States:
AT BE CH DE DK ES FR GB GR LI LU NL SE

(71) Applicant: AUTOMA S.p.A.
Via Chiesaccia, 38, Calcara - Ponte
Samoggia
I-40056 Crespellano (Bologna)(IT)

(72) Inventor: Bonardelli, Giovanni, c/o Automa
S.p.A.
Via Chiesaccia, 38, Calcara - Ponte
Samoggia
I-40056 Crespellano (Bologna)(IT)
Inventor: Tamburini, Renzo, c/o Automa S.p.A.
Via Chiesaccia, 38, Calcara - Ponte
Samoggia
I-40056 Crespellano (Bologna)(IT)

(74) Representative: Pederzini, Paolo
c/o BUGNION S.p.A. Via dei Mille, 19
I-40121 Bologna(IT)

(54) An extruding head enabling the extrusion of a plurality of parisons from a single extruder.

(57) In an extruding head, in particular for machines which blow-mould articles in plastic departing from an extruded parison and utilizing low viscosity plastic materials such as PET, the channel (5) from which the flow of molten material is discharged connects with at least two outlets (7) each forming a respective parison (44), in such a way that a number of parisons can be produced simultaneously with each extrusion cycle.

FIG2

# AN EXTRUDING HEAD ENABLING THE EXTRUSION OF A PLURALITY OF PARISONS FROM A SINGLE EXTRUDER

The present invention relates to an extruding head for machines of the type by which plastic articles are blow-moulded departing from extruded parisons, using low viscosity materials such as PET. The art field that relates to the manufacture of plastic containers, typically bottles and jerry-can type carriers, etc., embraces a long-established method of moulding which consists in extruding a hollow cylindrical tube, known as a parison, then rendering the parison plastic, enclosing it in a mould bearing the shape of the finished article, and blowing air into the hollow tube such that it expands and is forced to adapt to the shape of the mould, thereafter cooling to a condition in which the plastic acquires a mechanical consistency sufficient to permit of opening up the mould and removing the finished article.

Regarding the production of bottles and containers for food and drink, in particular, manufacturers have been making use for some time now of a polymer known as PET (polyethylene terephthalate); there are essentially two methods of fashioning plastic bottles from this material:
-injection and blow moulding in one stage, whereby a transformation from granules to finished article is brought about in a single machine;
-moulding in two stages, the first an injection stage serving to create initial formers, the second involving transfer of the formers to a blowing machine by which they are heated, and then dilated and/or drawn axially and transversely in a mould of the type mentioned above.

With the end in view of using PET to manufacture containers such as bottles, etc., though without having recourse to the injection methods mentioned above, the applicant has devised a new method of moulding, disclosed in application n° EP 90830100.5 that permits of fashioning containers in PET by extruding and blowing a parison. Among the features of such a method is that it exploits the effect of a selected extrusion velocity combined with natural cooling occasioned by the sharp drop in pressure which occurs beyond the extruder orifice; according to the method, in fact, the outer surface layers of the emerging parison undergo a rapid cooling, the effect of which is to invest the plastic material with a mechanical consistency sufficient to support its own weight until fully enclosed by the mould internally of which the parison will subsequently be inflated and expanded to match the shape or impression of the container afforded by the mould. As regards the simultaneous extrusion and blowing of several parisons into containers by one machine, the prior art teaches the use of several extruding heads locating one beside the next in such a way that the emerging parisons can be taken up by a single mould affording a corresponding number of impressions.

Such a machine is notably complicated by reason of the multiplicity of devices required for operation of the different extruding heads, and typified by bulk and high cost.

The object of the present invention is to overcome the drawbacks mentioned above.

The stated object is realized in an extruding head as characterized in the appended claims, from which at least two parisons can emerge simultaneously. Among the advantages of the present invention, the elimination of several independent extruding heads signifies not only an extreme simplification of the relative machine, but also the facility of spacing the emerging parisons apart one from the next under no distance restriction other than that imposed by the transverse dimensions of the containers in production. This same facility permits of reducing the dimensions, hence the weight and cost of the multiple mould, which in turn favourably influences the economy of the machine overall.

The invention will now be described in detail, by way of example, with the aid of the accompanying drawings, in which:
-fig 1 is a schematic illustration of the extruding head disclosed;
-fig 2 is the frontal and sectional illustration of a detail of the extruding head shown in fig 1 , and more exactly, the part affording a plurality of parison extruding orifices;
-fig 3 is the sectional illustration of a possible means of controlling the extrusion of a parison from the relative orifice;

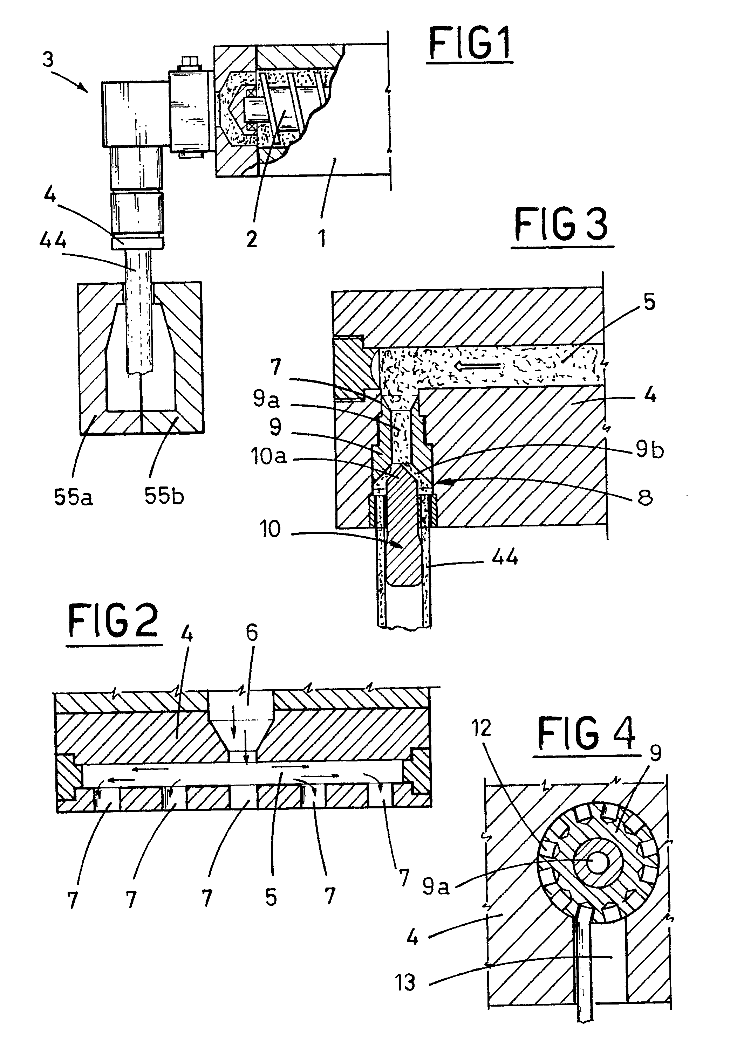

-fig 4 shows a part of the means of fig 3, viewed in plan. With reference to fig 1 of the drawings, 1 denotes a housing 1 encasing a screw drive 2 the function of which is to force plastic material, drawn in the molten state from an oven (not illustrated), toward an extruder denoted 3. The material emerges from the extruder 3 formed into parisons 44 which are then taken up between the two halves 55a and 55b of a split mould capable of movement between a first work station, at which the parisons are collected, and a second work station where each parison is offered to dilating means, typically an air nozzle, by which it is expanded to the point of matching the contour or shape of the finished article as impressed on the internal surfaces of the two mould halves.

According to the invention, the head section of the extruder 3 consists in a block 4 affording a main internal channel 5 in direct communication with the duct 6 along which the molten plastic is fed toward the extruder outlet.

The main channel 5 connects also with a plurality of externally exposed orifices 7 through which to extrude a corresponding plurality of parisons. As discernible from fig 3, each orifice 7 comprises means 8 by which to shape, and if appropriate, to control the flow of extruding material, consisting essentially in a nozzle formed as a bushing 9 that screws into the block 4, and a diffuser 10 likewise screwed into the block 4, which is located beyond the bushing in relation to the flow of material. 9a denotes the axial bore of the bushing 9, which connects with the main channel 5 on the one hand, and emerges on the other into a splayed cavity 9b accommodating the tip IOa of the diffuser 10.

A free association between the splayed cavity 9b and the tip 10a of the diffuser 10 ensures that the molten material emerging from the bore 9a envelops the diffuser 10 and assumes the hollow shape of a parison 44.

Where it is wished to control the flow of material emerging from the head, the bushing 9 might be made rotatable in either direction by means of a pin, insertable successively in a number of peripheral sockets 12 afforded by the bushing and accessible by way of an opening formed in the block 4. Rotation of the bushing 9 either distances or draws together the splayed cavity 9b and the tip 10a of the diffuser 10, thereby widening or narrowing the passage afforded to the extruding material.

In practical application, it has been observed that under selected operating conditions, amongst which the continuous pressure of the machine adopted for extrusion of the material in question and the width of the passages communicating with the orifices 7, the material supplied to the head is distributed uniformly within the main channel 5 and reaches the orifices 7 in equal proportions.

Pressure losses are practically negligible, given that optimum pressure internally of the extruding head, as intimated also in Italian application n. EP 90830100.5, will be between 50 and 100 bar, and preferably in the region of 70 bar.

Thus, in accordance with the invention and the objects stated at the outset, it becomes possible to extrude several parisons simultaneously from one head, spaced apart one from the next at a distance governed exclusively by the transverse dimensions of the containers in production, that is, by the distance between centres of adjacent impressions of the mould into which the parisons are ultimately directed.

To advantage, the block 4 might be screwed or made fast by other conventional means to the extruding head, so as to ensure interchangeability with other blocks 4 affording a different number of orifices, or with orifices of different size, such that the machine to which the extruding head is attached can be rendered still more flexible.

Needless to say, the part of the extruding head preceding the block 4 might be embodied in any given manner, and in particular, dissimilar to that set forth in Italian application n° EP 90830100.5.

## Claims

1) An extruding head permitting the extrusion of a plurality of parisons from one extruder,
characterized
in that it comprises a main channel (5) in receipt of extruded material from the outlet (3) of the extruder, connecting with at least two orifices (7) by which corresponding parisons (44) are formed and dispensed.

2) An extruding head as in claim 1, wherein the main channel and the orifices are formed internally of a block (4) that can be fastened to the extruder (3).

3) An extruding head as in claim 1 or 2, wherein each orifice is provided with means by which to control the flow of extruded material.

4) An extruding head as in claim 3, wherein control means comprise a bushing (9) screwed coaxially to the orifice (7) and affording an axial bore (9a) connecting on the one hand with the main channel in receipt of the extruded material, and on the other with a splayed cavity (9b) freely accommodating the tip (10a) of a diffuser (10) offered axially to and positioned beyond the orifice, in relation to the flow of material issuing from the extruder.

5) An extruding head as in claim 4, wherein the bushing affords a plurality of outwardly directed peripheral sockets (12) in which to insert a pin operated manually from externally of the head and serving to rotate the bushing in either direction and thus narrow or widen the passage afforded to the extruding material between the splayed cavity and the tip of the diffuser.

FIG1

FIG 3

FIG2

FIG 4